# EUROPÄISCHE PATENTSCHRIFT

(11) **EP 3 108 549 B1**
(45) Veröffentlichungstag und Bekanntmachung des Hinweises auf die Patenterteilung: **22.07.2020**
(21) Anmeldenummer: 15700673.5
(22) Anmeldetag: 15.01.2015
(51) Int. Cl.: H01T 4/12

(54) **UEBERSPANNUNGSSCHUTZELEMENT UND VERFAHREN ZUR HERSTELLUNG EINES UEBERSPANNUNGSSCHUTZELEMENTS**
OVERVOLTAGE PROTECTION ELEMENT AND METHOD FOR PRODUCING AN OVERVOLTAGE PROTECTION ELEMENT
ÉLÉMENT DE PROTECTION CONTRE LES SURTENSIONS ET PROCÉDÉ DE PRODUCTION D'UN ÉLÉMENT DE PROTECTION CONTRE LES SURTENSIONS

(30) Priorität: 18.02.2014 DE 102014102020
(43) Veröffentlichungstag der Anmeldung: 28.12.2016
(73) Patentinhaber: TDK Electronics AG, 81671 München (DE)
(72) Erfinder: SCHWEINZGER, Manfred, A-8541 Schwanberg (AT); OBERMAIR, Stefan, A-8510 Stainz (AT); DUDESEK, Pavol, A-8530 Deutschlandsberg (AT)
(74) Vertreter: Epping - Hermann - Fischer
(86) Internationale Anmeldenummer: PCT/EP2015/050681
(87) Internationale Veröffentlichungsnummer: WO 2015/124336

(56) Entgegenhaltungen:
- EP-A1- 2 400 605
- WO-A1-2013/129272
- US-A1- 2008 079 533
- US-A1- 2013 141 826

## Beschreibung

Die vorliegende Erfindung betrifft ein Überspannungsschutzelement und ein Verfahren zur Herstellung eines Überspannungsschutzelements.

Das Dokument US 2008/079533 A1 beschreibt ein Überspannungsschutzelement mit zwei Elektroden, zwischen denen ein poröses Entladungsdielektrikum angeordnet ist. Bei Überspannung wird eine elektrisch leitfähige Verbindung zwischen den Elektroden mittels Mikrolücken in dem Dielektrikum hergestellt. Auch das Dokument US 2013/141826 A1 beschreibt ein Überspannungsschutzelement mit zwei Elektroden und einem dazwischen angeordneten. Entladungsbereich, der einen porösen Körper mit Mikrolücken aufweist. EP2400605 A1 offenbart ein Überspannungsschutzelement gemäß dem Oberbegriff des Anspruchs 1.

Eine zu lösende Aufgabe ist es, ein verbessertes Überspannungsschutzelement, welches insbesondere kompakt ist und kostengünstig und/oder kostengünstig hergestellt werden kann, und/oder ein verbessertes Überspannungsschutzbauteil anzugeben.

Diese Aufgabe wird durch die Merkmale der unabhängigen Patentansprüche gelöst. Vorteilhafte Ausgestaltungen und Weiterbildungen sind Gegenstand der abhängigen Patentansprüche.

Ein vorgeschlagenes Überspannungsschutzelement umfasst eine erste Elektrode und eine zweite Elektrode, und einen Entladungsbereich, der zwischen der ersten Elektrode und der zweiten Elektrode angeordnet ist, wobei in dem Entladungsbereich ein poröses Entladungsdielektrikum angeordnet ist. Die erste Elektrode kann einen Stabilisierungskörper des Überspannungsschutzelements bilden. Das Überspannungsschutzelement ist weiterhin ausgebildet, in den Poren des porösen Entladungsdielektrikums ein Gas zu entladen und so eine elektrisch leitfähige Verbindung zwischen der ersten Elektrode und der zweiten Elektrode herzustellen. Das Entladungsdielektrikum dient vorzugsweise der elektrischen Trennung der ersten Elektrode von der zweiten Elektrode und umgekehrt. Mit Vorteil kann das Überspannungsschutzelement in oder mit einer besonders niedrigen Bauhöhe von typischerweise weniger als 100 µm, bevorzugt weniger als 50 µm, herstellbar oder hergestellt sein. Weiterhin oder dadurch erlaubt das vorgestellte Überspannungsschutzelement vorzugsweise eine Ausgestaltung mit sehr niedrigen elektrischen Kapazitäten, beispielsweise für den Einsatz in Hochfrequenzanwendungen. Zudem kann mit Vorteil durch Elektroden auf Basis einer Kupferfolie bzw. Siebdruckelektroden mit Kupfer (Cu) als Hauptbestandteil auf den Einsatz von teuren Edelmetallelektroden verzichtet werden.

Das Überspannungsschutzelement ist vorzugsweise zum Schutz beispielsweise einer elektronischen Baugruppe, vor Überspannungen auf der Basis von einer Luftentladung beziehungsweise Barriereentladung eingerichtet. Die Entladung ist vorzugsweise eine dielektrische Barriereentladung und das Gas ist vorzugsweise Luft oder ein Gasgemisch aus N₂ und H₂. Weiterhin dienen die Poren des porösen Entladungsdielektrikums als Entladungsspalt.

Durch die Entladung in den Poren des porösen Entladungsdielektrikums entstehen vorzugsweise freie Elektronen und/oder ionisierte Gasmoleküle, beispielsweise aus der Umgebungsluft, die einen elektrischen Kontakt zwischen den beiden Elektroden herstellen, sobald eine an den beiden Elektroden anliegende Überspannung überschritten wird. Der Kontakt kann vorzugsweise besonders hohe elektrische Ströme tragen.

Die genannte Überspannung kann beispielsweise dadurch bestimmt sein, dass sie einen bestimmten Schwellwert, ab welchem beispielsweise eine durch das Überspannungsschutzelement zu schützende Baugruppe zerstört oder beschädigt wird, überschreitet. Eine solche Überspannung kann im Betrieb des Überspannungsschutzelements vorzugsweise gegen Masse abgeführt werden.

In einer Ausgestaltung weist das Entladungsdielektrikum eine niedrige Dielektrizitätskonstante auf. Durch diese Ausgestaltung können elektrische Kapazitäten, insbesondere parasitäre Kapazitäten im Betrieb des Überspannungsschutzelements mit Vorteil verhindert oder eingeschränkt werden.

In einer Ausgestaltung sind die erste Elektrode und die zweite Elektrode aus einem unedlen Metall. Durch diese Ausgestaltung kann mit Vorteil auf den Einsatz teurer Edelmetalle als Elektrodenmaterialien verzichtet werden.

In einer Ausgestaltung sind die erste Elektrode und die zweite Elektrode aus Kupfer (Cu). Durch diese Ausgestaltung können mit Vorteil die Eigenschaften einer hohen elektrischen und thermischen Leitfähigkeit im Betrieb des Überspannungsschutzelements ausgenutzt werden.

In einer Ausgestaltung weist der Entladungsbereich, beziehungsweise das Entladungsdielektrikum eine Dicke zwischen 5 µm und 50 µm auf.

In einer Ausgestaltung weist das Überspannungsschutzelement eine Bauteildicke zwischen 30 µm und 100 µm auf.

Die beiden zuletzt genannten Ausführungsformen erlauben mit Vorteil eine kompakte Ausgestaltung des Überspannungsschutzelements, insbesondere entlang einer Bauteilhöhe desselben. Dadurch kann weiterhin eine kosten- und raumeffiziente Miniaturisierung erreicht werden. Weiterhin bietet diese niedrige Bauhöhe die Möglichkeit, die Bauelemente platzsparend, beispielsweise unterhalb der zu schützenden Baugruppen auf einer Platine zu positionieren, bzw. sogar diese in die Platine zu integrieren.

In einer Ausgestaltung umfasst das Entladungsdielektrikum Zirkoniumoxid, beispielsweise ZrO₂, Aluminiumoxid, beispielsweise Al₂O₃ und/oder Magnesiumoxid, beispielsweise MgO. Zirkoniumdioxid hat vorteilhafterweise eine niedrige Dielektrizitätskonstante, so dass parasitäre Kapazitäten, wie oben erwähnt, mit Vorteil im Betrieb des Überspannungsschutzelements, insbesondere im Zusammenwirken mit einer vor Überspannungen zu schützenden Baugruppe, beispielsweise eines elektronischen Bauteils, verhindert werden können.

In einer Ausgestaltung weist das Überspannungsschutzelement einen Verbindungsbereich auf, wobei in dem Verbindungsbereich ein Verbindungsdielektrikum angeordnet ist, über das die erste und die zweite Elektrode mechanisch stabil miteinander verbunden sind. Das Verbindungsdielektrikum ist zweckmäßigerweise ebenfalls zur elektrischen Trennung der ersten und der zweiten Elektrode vorgesehen und weist vorzugsweise ebenfalls eine niedrige Dielektrizitätskonstante, vorzugsweise mit Werten auf.

Durch die Vorsehung des Verbindungsdielektrikums kann vorzugsweise in dem Verbindungsbereich die mechanische Stabilität des Überspannungsschutzelements, insbesondere mechanische Stabilität oder Zusammenhalt zwischen der ersten Elektrode und der zweiten Elektrode erreicht oder hergestellt werden.

In einer Ausgestaltung ist das Verbindungsdielektrikum zumindest teilweise in einem zwischen der ersten und der zweiten Elektrode gebildeten Zwischenraum angeordnet. Diese Ausgestaltung erlaubt zweckmäßigerweise die Ausbildung des Verbindungsbereichs, und dadurch die Herstellung der mechanischen Stabilität des Überspannungsschutzelements zwischen der ersten und der zweiten Elektrode.

In einer Ausgestaltung ist das Verbindungsdielektrikum mechanisch stabiler mit der ersten und der zweiten Elektrode verbunden als das Entladungsdielektrikum. Diese Verbindung bezieht sich vorzugsweise auf eine standardmäßige Verbindung, beispielsweise eine Sinterverbindung, zwischen dielektrischen Materialien und Elektrodenmaterialien.

In einer Ausgestaltung sind der Entladungsbereich und der Verbindungsbereich nebeneinander angeordnet. Durch diese Ausgestaltung kann mit Vorteil eine kompakte Bauweise, beispielsweise Dünnschichtbauweise, des Überspannungsschutzelements ermöglicht werden. Weiterhin erlaubt diese Ausgestaltung mit Vorteil das Wirken oder Fungieren des Verbindungsdielektrikums und des Entladungsdielektrikums als gemeinsames oder ähnlich einem gemeinsamen Dielektrikum des Überspannungsschutzelements.

In einer Ausgestaltung umläuft der Verbindungsbereich in Aufsicht auf das Überspannungsschutzelement betrachtet den Entladungsbereich. Durch diese Ausgestaltung kann mit Vorteil besonders zweckmäßig die mechanisch stabile Verbindung und/oder die mechanische Stabilität des Überspannungsschutzelements in den den Entladungsbereich umlaufenden Bereichen hergestellt werden.

In einer bevorzugten Ausgestaltung weist das Entladungsdielektrikum eine größere Porosität auf als das Verbindungsdielektrikum. Durch diese Ausgestaltung kann mit Vorteil der Entladungsbereich sowie die mechanische Stabilität oder Verbindung über den Verbindungsbereich hergestellt werden. Mit anderen Worten erlaubt die größere Porosität des Entladungsdielektrikums das Entladen eines Gases in den Poren des Entladungsdielektrikums, wobei eine kleinere Porosität und/oder beispielsweise eine dadurch resultierende größere Dichte des Verbindungsdielektrikums die mechanisch stabile Verbindung zwischen der ersten und der zweiten Elektrode und/oder die mechanische Stabilität des Überspannungsschutzelements ermöglicht.

In einer Ausgestaltung, die nicht zur vorliegenden Erfindung gehört, sind das Entladungsdielektrikum und das Verbindungsdielektrikum durch zwei verschiedene und/oder separate Komponenten oder Körper, beispielsweise Dielektrikumskörper, aus unterschiedlichen Materialien gebildet. Gemäß dieser Ausgestaltung sind die Materialien des Entladungsdielektrikums und des Verbindungsdielektrikums vorzugsweise nicht stoffschlüssig miteinander verbunden. Stattdessen existiert vorzugsweise ein diskreter Phasenübergang zwischen unterschiedlichen Materialphasen des Entladungsdielektrikums und des Verbindungsdielektrikums. Die Materialphasen bezeichnen in diesem Zusammenhang vorzugsweise keine Aggregatzustände.

Gemäß dieser Ausgestaltung können das Verbindungsdielektrikum und das Entladungsdielektrikum beispielsweise während der Herstellung des Überspannungsschutzelements vorzugsweise separat und/oder sequentiell bereitgestellt werden.

In einer Ausgestaltung überlappt das Verbindungsdielektrikum zwischen der ersten und der zweiten Elektrode zumindest teilweise mit dem Entladungsdielektrikum. Durch diese Ausgestaltung kann unter Umständen die mechanische Stabilität des Überspannungsschutzelements allein durch die erste Elektrode und des Verbindungsdielektrikums hergestellt werden.

Erfindungsgemäß sind das Verbindungsdielektrikum und das Entladungsdielektrikum durch unterschiedliche Materialphasen in einem gemeinsamen Dielektrikumskörper gebildet. Weiter erfindungsgemäß gehen die genannten Materialphasen kontinuierlich ineinander über. Vorzugsweise hängen gemäß dieser Ausgestaltung das Verbindungsdielektrikum und das Entladungsdielektrikum stoffschlüssig miteinander zusammen oder sind stoffschlüssig miteinander verbunden.

In einer Ausgestaltung ist die erste Elektrode eine Kupferschicht mit einer Schichtdicke zwischen 10 µm und 100 µm. Gemäß dieser Ausgestaltung kann die erste Elektrode vorteilhafterweise als Stabilisierungskörper, des Überspannungsschutzelements fungieren.

In einer Ausgestaltung bildet die erste Elektrode einen Stabilisierungskörper für das Überspannungsschutzelement. Durch diese Ausgestaltung kann mit Vorteil auf einen separaten Träger des Überspannungsschutzelements verzichtet werden und das Überspannungsschutzelement kompakt, insbesondere mit einer geringen Bauteildicke, ausgeführt werden.

In einer alternativen Ausgestaltung weist das Überspannungsschutzelement eine keramische Folie als Stabilisierungskörper auf, auf welcher die erste Elektrode aufgebracht oder angeordnet ist. Diese Ausgestaltung erlaubt mit Vorteil eine oberflächenmontierbare Ausgestaltung des Überspannungsschutzelements.

In einer Ausgestaltung sind die erste Elektrode und die zweite Elektrode strukturiert, wobei das Überspannungsschutzelement oberflächenmontierbar ausgeführt ist. Durch dieses Ausgestaltung können insbesondere die Vorteile einer oberflächenmontierbaren Ausgestaltung, beispielsweise die Möglichkeit das Überspannungsschutzelement direkt auf eine Leiterplatte oder elektronische Baugruppe zu löten, ausgenutzt werden.

Ein weiterer Aspekt der vorliegenden Anmeldung betrifft ein Überspannungsschutzbauteil, welches eine Vielzahl von in einem Feld nebeneinander angeordneten Überspannungsschutzelementen, wie oben beschrieben, aufweist. Die Überspannungsschutzelemente sind gemäß dieser Ausgestaltung vorzugsweise nebeneinander und/oder als Streifen oder in einer gemeinsamen Ebene oder auf einer gemeinsamen Oberfläche angeordnet und/oder hergestellt. Gemäß dieser Ausgestaltung kann weiterhin das Feld von Überspannungsschutzelementen, beispielsweise für die Integration in eine elektronische Baugruppe beispielsweise eines elektronischen Bauelements, ermöglicht oder vereinfacht werden.

In einer Ausgestaltung des Überspannungsschutzbauteils sind die Überspannungsschutzelemente in Vielschichtausführung in dem Überspannungsschutzbauteil übereinander angeordnet. Durch diese Ausgestaltung kann mit Vorteil eine größere Stromtragfähigkeit des Bauteils ermöglicht und/oder die Strombelastbarkeit des Überspannungsschutzbauteils mit Vorteil erhöht werden.

Ein weiterer Aspekt der vorliegenden Anmeldung betrifft ein elektronisches Bauteil umfassend mindestens ein wie oben beschriebenes Überspannungsschutzelement, welches in die Bauform einer von diesem Überspannungsschutzelement vor Überspannungen zu schützenden Baugruppe des elektronischen Bauteils integriert ist.

Ein weiterer Aspekt der vorliegenden Anmeldung betrifft ein Verfahren zur Herstellung des Überspannungsschutzelements. Das Verfahren umfasst das Breitstellen der ersten Elektrode für das Überspannungsschutzelement, das Versehen der ersten Elektrode mit einem Grundmaterial für das Entladungsdielektrikum sowie das Versehen der mit dem Grundmaterial versehenen ersten Elektrode mit einem Verbindungsmaterial für das Verbindungsdielektrikum. Das Verfahren umfasst weiterhin das Versehen der mit dem Grundmaterial versehenen ersten Elektrode mit einer zweiten Elektrode zur Herstellung eines Grundkörpers. Vorzugsweise wird die erste Elektrode vor dem Versehen derselben mit zweiten Elektrode mit dem Verbindungsmaterial versehen. Das Verfahren umfasst zudem das Aussetzen des Grundkörpers einer Temperatur, wobei die Temperatur derart gewählt ist, dass das Verbindungsmaterial mit der ersten und der zweiten Elektrode versintert wird und so das Verbindungsdielektrikum gebildet wird, und aus dem Grundmaterial das Entladungsdielektrikum gebildet wird, wobei das Entladungsdielektrikum porös ist. Während des Versinterns wird vorzugsweise die mechanische Stabilität oder der mechanische Zusammenhalt des Überspannungsschutzelements zwischen der ersten und der zweiten Elektrode hergestellt.

Das Verbindungsmaterial und das Grundmaterial sind vorzugsweise beide ungesinterte Rohmaterialien. Beispielsweise umfassen sowohl das Grundmaterial als auch das Verbindungsmaterial ein Keramikpulver. Die genannten Materialien sind vorzugsweise derart gewählt, dass bei der Temperatur zweckmäßigerweise das Verbindungsmaterial effektiver, besser oder dichter versintert werden kann als das Grundmaterial, um so die mechanische Stabilität des Überspannungsschutzelements herzustellen.

Zweckmäßigerweise bleiben nach dem Aussetzen des Grundkörpers der Temperatur, welche vorzugsweise eine Sintertemperatur ist, Poren in dem Entladungsdielektrikum zurück, welche, wie oben beschrieben, als Entladungsspalte für eine Gasentladung in den Poren des Entladungsdielektrikums, dienen.

In einer Ausgestaltung des Verfahrens liegt die Temperatur unterhalb der Schmelztemperatur von Kupfer. Diese Ausgestaltung ist insbesondere zweckmäßig bei der Verwendung von Kupferelektroden, um ein Schmelzen der Elektroden während der Herstellung des Überspannungsschutzelements zu vermeiden.

In einer Ausgestaltung des Verfahrens beträgt die Temperatur zwischen 500°C und 1050°C.

In einer Ausgestaltung des Verfahrens wird der Grundkörper der Temperatur unter einer Schutzgasatmosphäre ausgesetzt. Diese Ausgestaltung ermöglicht insbesondere den Schutz der ersten und oder der zweiten Elektrode vor Oxidation. Für den Fall, dass die erste und/oder die zweite Elektrode aus Kupfer besteht, kann so verhindert werden, dass das Kupfer oxidiert und die Elektroden unbrauchbar werden und damit die Funktion des Überspannungsschutzelements eingeschränkt oder verhindert wird.

In einer Ausgestaltung des Verfahrens wird für das Versehen der ersten Elektrode mit dem Grundmaterial, dieses strukturiert aufgebracht. Wie oben beschrieben, kann durch diese Ausgestaltung die Anordnung des Grundmaterials nur in bestimmten Bereichen, beispielsweise auf der Oberfläche des Überspannungsschutzelements oder Überspannungsschutzbauteils, ermöglicht werden.

In einer Ausgestaltung des Verfahrens wird für das Versehen der ersten Elektrode mit dem Verbindungselement, dieses strukturiert aufgebracht. Diese Ausgestaltung erlaubt die Anordnung des Verbindungsdielektrikums beispielsweise in bestimmten Bereichen der Oberfläche des Überspannungsschutzelements oder Überspannungsschutzbauteils, insbesondere in dem oder den Verbindungsbereichen.

In einer Ausgestaltung des Verfahrens wird das Verbindungsmaterial neben dem Grundmaterial angeordnet. Dabei kann das Verbindungsmaterial, im Wege des Versehens der ersten Elektrode mit den genannten Materialien, vorzugsweise bis auf den oben genannten zumindest teilweisen Überlapp, vollständig neben dem Grundmaterial, beispielsweise in derselben Schichtebene, angeordnet werden.

In einer Ausgestaltung des Verfahrens wird die erste Elektrode großflächig mit dem Grundmaterial versehen, wobei das Verbindungsmaterial auf das Grundmaterial aufgebracht wird und dabei Bereiche des Grundmaterials vom Verbindungsmaterial frei bleiben. Die Bereiche bleiben dabei zweckmäßigerweise zur Ausbildung des Entladungsdielektrikums frei. Gemäß dieser Ausgestaltung ist das Verbindungsmaterial vorzugsweise derart gewählt, dass schon bei der genannten Temperatur, die mechanische Stabilität des Überspannungsschutzelements während des Versinterns beziehungsweise des Aussetzens des Grundkörpers der Temperatur ermöglicht wird.

In einer Ausgestaltung beträgt die Temperatur zwischen 500°C und 1050°C.

In einer Ausgestaltung des Verfahrens diffundiert das Verbindungsmaterial während des Aussetzens der Temperatur durch das Grundmaterial hindurch, wodurch die mechanische Stabilität zwischen der ersten Elektrode und der zweiten Elektrode hergestellt wird.

In einer Ausgestaltung des Verfahrens wird die erste Elektrode mittels Siebdruck mit dem Grundmaterial und dem Verbindungsmaterial versehen.

In einer Ausgestaltung des Verfahrens wird die erste Elektrode durch Folienziehen bereitgestellt.

Ein weiterer Aspekt der vorliegenden Anmeldung betrifft ein Verfahren zur Herstellung eines Überspannungsschutzbauteils, welches eine Vielzahl von in einem Feld nebeneinander angeordneten Überspannungsschutzelementen, wie oben beschrieben, aufweist. Dabei sind die einzelnen Überspannungsschutzelemente zweckmäßigerweise parallel prozessiert worden, so dass sich Verfahrensschritte, welche oben für das einzelne Überspannungsschutzelement beschrieben sind, genauso für das Überspannungsschutzbeuteil gelten können.

In einer Ausgestaltung des zuletzt beschriebenen Verfahrens wird das Überspannungsschutzbauteil nach dem Aussetzen des Grundkörpers der Temperatur in einzelne Überspannungsschutzelemente vereinzelt.

Das Überspannungsschutzelement und/oder das Überspannungsschutzbauteil ist vorzugsweise mittels des hier beschriebenen Verfahrens herstellbar oder hergestellt, insbesondere sind sämtliche für das Verfahren offenbarte Merkmale auch für das Überspannungsschutzelement und/oder das Überspannungsschutzbauteil offenbart und umgekehrt.

Weitere Vorteile, vorteilhafte Ausgestaltungen und Zweckmäßigkeiten der Erfindung ergeben sich aus der folgenden Beschreibung der Ausführungsbeispiele in Verbindung mit den Figuren.
Figur 1A zeigt eine schematische Schnitt- oder Seitenansicht eines Überspannungsschutzelements.
Figur 1B zeigt eine Aufsicht auf ein Überspannungsschutzelement.
Figur 1C zeigt eine vergrößerte mikroskopische Schnittansicht eines Teils des Überspannungsschutzelements aus Figur 1B.
Figur 2A zeigt eine schematische Aufsicht auf ein Überspannungsschutzbauteil.
Figur 2B zeigt eine schematische Seitenansicht des Überspannungsschutzbauteils aus Figur 2A.
Figur 2C zeigt eine mikroskopische Aufsicht auf ein Überspannungsschutzbauteil.
Figur 3A zeigt ein beispielhaftes Schaltverhalten eines Überspannungsschutzelements gemäß den Figuren 1A, 1B und/oder 1C.
Figur 3B zeigt ein beispielhaftes Ansprechverhalten eines Überspannungsschutzelements als Antwort auf einen rechteckförmigen Testpuls gemäß den Figuren 1A, 1B und/oder 1C.
Figur 4 zeigt eine schematische Seiten- oder Schnittansicht eines Überspannungsschutzbauteils beispielsweise gemäß Figur 2A und/oder 2B.
Figur 5 zeigt eine schematische Schnitt- oder Seitenansicht eines Überspannungsschutzelements gemäß einer zu Figur 4 alternativen Ausführungsform.
Figur 6 zeigt eine schematische Aufsicht auf ein Überspannungsschutzelement gemäß einer weiteren alternativen Ausführungsform.

Gleiche, gleichartige und gleich wirkende Elemente sind in den Figuren mit gleichen Bezugszeichen versehen. Die Figuren und die Größenverhältnisse der in den Figuren dargestellten Elemente untereinander sind nicht als maßstäblich zu betrachten. Vielmehr können einzelne Elemente zur besseren Darstellbarkeit und/oder zum besseren Verständnis übertrieben groß dargestellt sein.

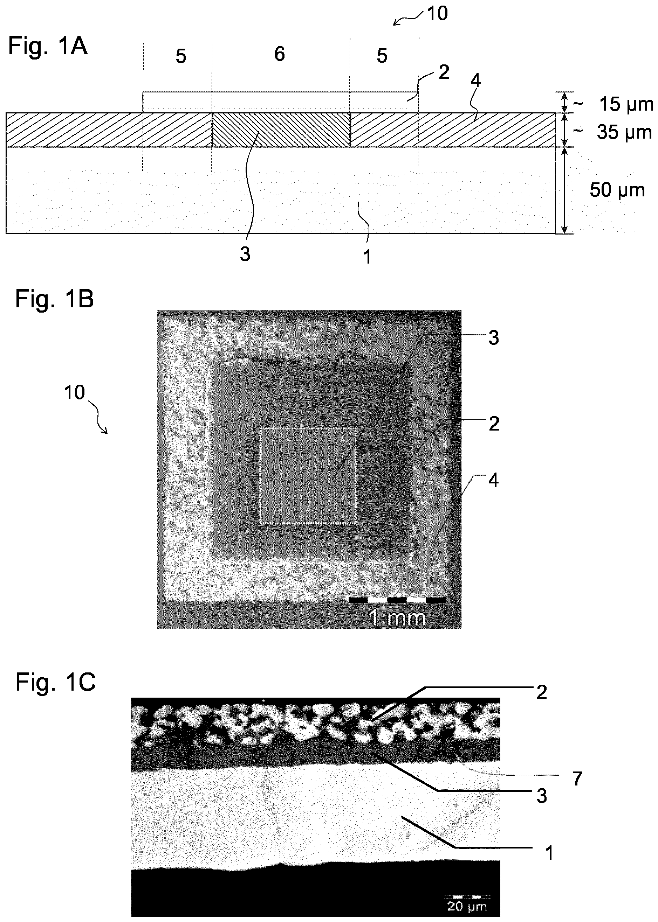

Figur 1A zeigt in einer ersten Ausgestaltung ein Überspannungsschutzelement 10. Das Überspannungsschutzelement 10 weist eine erste Elektrode 1 auf. Die erste Elektrode 1 ist vorzugsweise durch Folienziehen einer massiven Cu-Folie oder eines Cu-Werkstücks, wie beispielsweise in oder aus der Herstellung von Batterien üblich oder bekannt, bereitgestellt. Alternativ kann die erste Elektrode 1 durch Siebdruck oder ein anderes geeignetes Verfahren bereitgestellt werden. Die erste Elektrode 1 kann eine Schichtdicke zwischen 10 µm und 100 µm aufweisen.

Das Überspannungsschutzelement 10 weist weiterhin eine zweite Elektrode 2 auf. Die erste und die zweite Elektrode 1, 2 sind vorzugsweise aus Kupfer oder einem anderen unedlen Metall. Die erste Elektrode 1 stellt weiterhin vorzugsweise einen Stabilisierungskörper für das Überspannungsschutzelement 10 dar.

Das Überspannungsschutzelement 10 weist zudem ein Entladungsdielektrikum 3 auf. Das Entladungsdielektrikum 3 weist vorzugsweise eine niedrige Dielektrizitätskonstante, beispielsweise mit Werten zwischen 5 und 100 As/Vm, auf. Das Entladungsdielektrikum 3 besteht gemäß dieser Ausführungsform vorzugsweise aus Zirkoniumoxid (beispielsweise ZrO₂) mit einem 5%-igen Glasanteil oder umfasst dieses mit einem 5%-igen Glasanteil. Alternativ kann das Entladungsdielektrikum 3 Aluminiumoxid, beispielsweise Al₂O₃ und/oder Magnesiumoxid, beispielsweise MgO, aufweisen. Das Entladungsdielektrikum 3 ist vorzugsweise porös oder weist Poren auf (vgl. 7 in Figur 1C). Das Überspannungsschutzelement 10 ist vorzugsweise ausgebildet, in den Poren des Entladungsdielektrikums ein Gas zu entladen und so eine elektrisch leitfähige Verbindung zwischen der ersten Elektrode 1 und der zweiten Elektrode 2 herzustellen. Das Entladungsdielektrikum 3 kann eine Dicke zwischen 5 µm und 50 µm aufweisen. Beispielhafte Dicken der einzelnen in Figur 1A gezeigten Schichten des Überspannungsschutzelements 10 sind am rechten Rand der Figur eingezeichnet.

Das Entladungsdielektrikum weist vorzugsweise eine Dicke zwischen 5 µm und 50 µm auf.

Das Überspannungsschutzelement 10 weist weiterhin ein Verbindungsdielektrikum 4 auf, welches in der Figur 1A auf beiden Seiten des Entladungsdielektrikums 3 angeordnet ist. Das Verbindungsdielektrikum 4 weist vorzugsweise ebenfalls eine niedrige Dielektrizitätskonstante, beispielsweise mit Werten zwischen 5 und 100 As/Vm, auf. Das Verbindungsdielektrikum 4 ist zumindest teilweise in einem von der ersten Elektrode 1 und der zweiten Elektrode 2 gebildeten Zwischenraum (nicht explizit gekennzeichnet) angeordnet.

In Aufsicht auf das Überspannungsschutzelement 10 betrachtet umläuft das Verbindungsdielektrikum 4 vorzugsweise das Entladungsdielektrikum 3. Das Verbindungsdielektrikum 4 besteht gemäß dieser Ausführungsform vorzugsweise aus Zirkoniumoxid (beispielsweise ZrO₂) mit einem 30%-igen Glasanteil oder umfasst dieses mit einem 30%-igen Glasanteil. Alternativ kann das Verbindungsdielektrikum 4 Aluminiumoxid, beispielsweise Al₂O₃ und/oder Magnesiumoxid, beispielsweise MgO, oder ein anderes Material aufweisen, welches beispielsweise während des Aussetzens der Temperatur ohne den genannten höheren Glasanteil nicht oder nicht vollständig verdichtet oder versintert wird.

Das Entladungsdielektrikum 3 und das Verbindungsdielektrikum 4 umfassen oder bestehen gemäß dieser Ausführungsform vorzugsweise aus einer Keramik.

Der Bereich 5 bezeichnet in Figur 1A einen Verbindungsbereich, in dem die erste Elektrode 1 und die zweite Elektrode 2 über das Verbindungsdielektrikum 4 mechanisch stabil miteinander verbunden sind und so die mechanische Stabilität des Überspannungsschutzelements 10 herstellen oder gewährleisten. Das Überspannungsschutzelement 10 weist weiterhin einen Entladungsbereich 6 auf, in welchem die oben genannte Gasentladung zwischen der ersten Elektrode 1 und der zweiten Elektrode 2 - im Falle einer an diese Elektroden angelegten oder dazwischen auftretenden Überspannung - gezündet oder aufgebaut werden kann. Die genannte Überspannung kann vorzugsweise über einen Masseanschluss des Überspannungsschutzelements 10 abgeführt werden kann.

Aufgrund der Zusammensetzung kann das Verbindungsdielektrikum ebenfalls ein poröses Material und/oder Poren aufweisen. Zweckmäßigerweise ist jedoch die Porosität des Entladungsdielektrikums 3 größer als diejenige des Verbindungsdielektrikums 4.

Das Verbindungsdielektrikum 4 und/oder die zweite Elektrode 2 werden vorzugsweise mittels Siebdruck in strukturierter Form aufgebracht oder bereitgestellt. Vorzugsweise ist die zweite Elektrode 2 weiterhin derart aufgebracht oder abgeschieden, dass sie die erste Elektrode beispielsweise nicht vollständig überdeckt.

Während einer Herstellung des Überspannungsschutzelements 10 wird vorzugsweise zuerst die erste Elektrode 1 bereitgestellt, diese anschließend mit einem Grundmaterial für das Entladungsdielektrikum 3 und danach mit einem Verbindungsmaterial für das Verbindungsdielektrikum 4 versehen. Anschließend wird der entstandene Verbund oder Körper vorzugsweise mit der zweiten Elektrode versehen und einer Temperatur, die vorzugsweise unterhalb des Schmelzpunktes von Kupfer, also dem bevorzugten Material der ersten und der zweiten Elektrode liegt, ausgesetzt. Die Temperatur kann beispielsweise zwischen 500°C und 1050°C betragen. Durch das Aussetzen der Temperatur, wird das Verbindungsmaterial zusammen mit der ersten und der zweiten Elektrode 1, 2 versintert und das Verbindungsdielektrikum 4 gebildet. Weiterhin wird während dieses Aussetzens aus dem Grundmaterial das Entladungsdielektrikum 4 gebildet. Das Entladungsdielektrikum 3 beziehungsweise das Grundmaterial wird dabei nicht vollständig versintert oder verdichtet, so dass die oben genannten Poren im Entladungsdielektrikum 3 zurückbleiben.

Das Herstellungsverfahren und/oder das Überspannungsschutzelements 10 kann sich auf Niedertemperatur-Einbrand-Keramiken beziehen.

Figur 1B zeigt eine mikroskopische Aufsicht auf ein Überspannungsschutzelements 10 gemäß der in Figur 1A gezeigten Ausführungsform. Das Überspannungsschutzelement 10 weist eine quadratische Grundfläche mit einer Kantenlänge von circa 2,5 mm auf. Das innere weiß umrandete Quadrat deutet die Fläche des Entladungsdielektrikums 3 an. Es ist weiter zu erkennen, dass die zweite Elektrode 2 das genannte Entladungsdielektrikum 3 vollständig überdeckt, so dass der Verbindungsbereich 5 den Entladungsbereich 6 umläuft und in dem Verbindungsbereich 5 die mechanische Stabilität des Überspannungsschutzelements 10 herstellt.

Figur 1C zeigt eine mikroskopische Schnittansicht eines Teils des Überspannungsschutzelements 10 gemäß den Figuren 1A und 1B. Es ist in Figur 1C zu erkennen, dass das Entladungsdielektrikum 3 eine poröse Struktur hat. In dem Entladungsdielektrikum 3 sind einzelne Poren 7 mit Durchmessern von circa 5 µm zu erkennen. Die Poren 7 können im Betrieb des Überspannungsschutzelements 10 beispielsweise mit Umgebungsluft oder mit einem Gasgemisch aus N₂ und H₂, welches auch beim Sintern des Überspannungsschutzelements 10 oder einzelner Komponenten desselben verwendet wird, gefüllt sein. Weiterhin weist die zweite Elektrode 2, welche gemäß dieser Ausführungsform beispielsweise mittels Siebdruck aufgebracht wurde, eine poröse Struktur auf, worauf es in der vorliegenden Anmeldung jedoch im Einzelnen nicht ankommt. Die erste Elektrode 1 ist gemäß dieser Ausführungsform mit einem anderen Herstellungsverfahren (außer Siebdruck), beispielsweise einem Folienziehprozess mit einer Dicke von circa 50 µm, bereitgestellt worden.

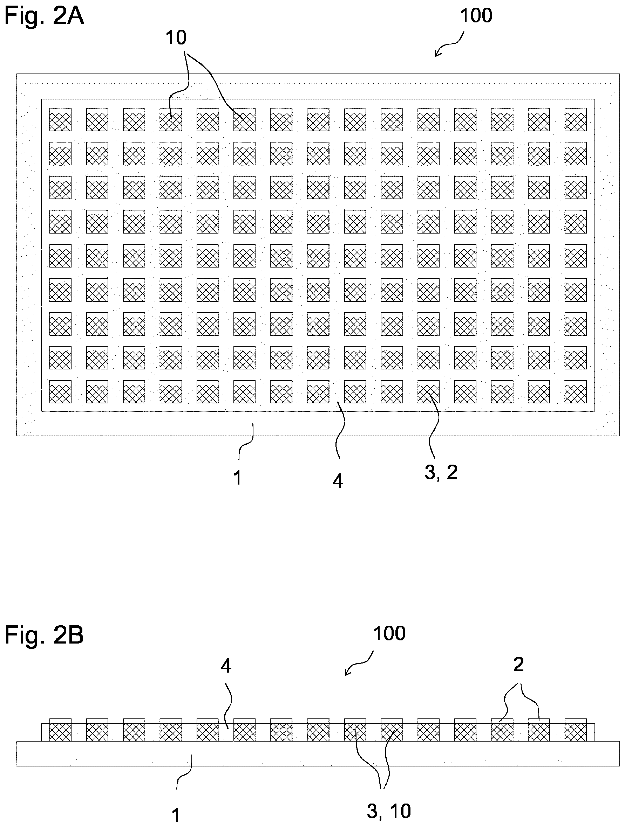

Figur 2A zeigt ein Überspannungsschutzbauteil 100, welches eine Vielzahl von in einem Feld angeordneten Überspannungsschutzelementen 10 aufweist. In Figur 2A sind die Überspannungsschutzelemente 10 in einem 15-mal-9-Feld auf derselben ersten Elektrode 1, beispielsweise einer Kupferfolie, angeordnet dargestellt. In Figur 2A sind also eine gemeinsame erste Elektrode 1 und eine Vielzahl von zweiten Elektroden 2 gemäß der Anzahl der Überspannungsschutzelemente 10 dargestellt. Vorzugsweise werden die einzelnen Überspannungsschutzelemente 10 durch Vereinzelung aus dem Überspannungsschutzbauteil durch Vereinzelung hergestellt.

Dabei können auch einzelne Teilfelder oder Streifen des Überspannungsschutzbauteils 100 oder auch das ganze gezeigte Feld in einem Stück weiter verarbeitet, beispielsweise mit einer Außenterminierung oder Außenelektrode versehen werden und/oder in die Bauform einer vor Überspannungen zu schützenden Baugruppe eines elektronischen Bauteils (nicht explizit dargestellt) integriert werden.

Obwohl dies nicht explizit dargestellt ist, können einzelne oder nebeneinander angeordnete Überspannungsschutzelemente 10 auch in Vielschichtbauweise übereinander zur Ausbildung eines Überspannungsschutzbauteils angeordnet werden.

Figur 2B zeigt eine schematische Seitenansicht des Überspannungsschutzbauteils 100 gemäß der Figur 2A. Die karierten Flächen in der Figur 2A und 2B deuten insbesondere die poröse Struktur oder das poröse Material des Entladungsdielektrikums 3 an.

Das Überspannungsschutzbauteil 100 weist vorzugsweise eine Bauteildicke zwischen 30 µm und 100 µm auf.

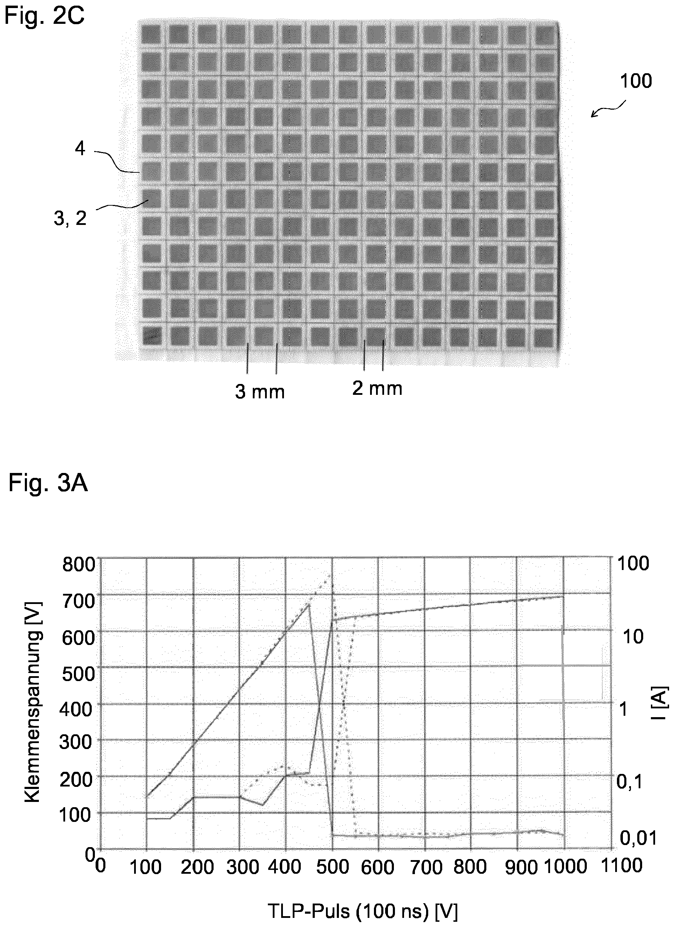

Figur 2C zeigt eine mikroskopische Aufsicht auf zumindest einen Teil eines Überspannungsschutzbauteils 100, welches aus einem Feld von 12 mal 15 Überspannungsschutzelementen 10 aufgebaut ist. Die einzelnen Überspannungsschutzelemente 10 weisen vorzugsweise eine Breite von circa 3 mm und die zweiten Elektroden 2 vorzugsweise eine Breite von circa 2 mm, wie dargestellt auf.

Figur 3A zeigt beispielhaft das Schaltverhalten eines Überspannungsschutzelements 10 (siehe oben). Das Entladungsdielektrikum der vermessenen Probe weist in diesem Fall eine quadratische Fläche von 0,8 mal 0,8 mm und einen Elektrodenabstand zwischen der ersten Elektrode 1 und der zweiten Elektrode 2 (vergleiche beispielsweise Figur 1A) von 40 µm auf. Die Dicke der ersten Elektrode 1 beträgt hier circa 50 µm.

Es ist ferner zu erkennen, dass auf der linken Koordinate die Schalt- oder Klemmspannung und auf der rechten Koordinate der Schaltstrom für zwei verschiedenen Messungen dargestellt ist. Sowohl die Klemmspannung als auch der TLP-Puls sind in Volt und der Schaltstrom in Ampere angegeben. Bei einer Klemmspannung von ungefähr 700 V wird die durch das Entladungsdielektrikum gebildete Schaltstrecke leitend und die Spannung fällt auf einen Wert von circa 30 V ab. Gleichzeitig steigt jeweils der Strom zwischen der ersten und der zweiten Elektrode von unter 0,1 A auf circa 30 A bei einer Klemmspannung von 1 kV an. Dieses Verhalten gilt für beide vermessenen Proben/Kurven in ähnlicher Weise.

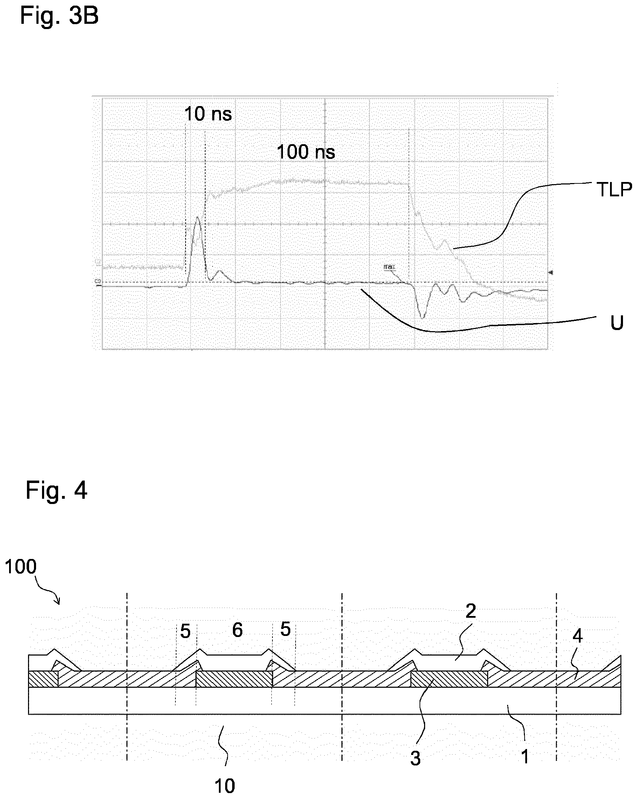

In Figur 3B ist das Ansprechverhalten oder ein Spannungsverlauf eines Überspannungsschutzelementes als Antwort auf einem 100 ns langen TLP-Puls dargestellt. In dem Diagramm aus Figur 3B ist eine Klemmspannung, das heißt eine Spannung zwischen der ersten Elektrode 1 und der zweiten Elektrode 2 über einem TLP-Puls mit einer Zeitdauer von 100 ns aufgetragen. "TLP", englisch für "transmission line pulse", bezeichnet eine Standardtestmethode für integrierte Schaltkreise, mit dem das Schaltverhalten beispielsweise als Antwort auf eine elektrostatische Entladung oder Überspannung getestet werden kann. Der TLP-Puls ist in Figur 3B mit TLP und der Spannungsverlauf mit U bezeichnet. Es ist zu erkennen, dass das Überspannungsschutzelement 100 durch den TLP-Puls leitend wird und zu Beginn des Pulses ein Spannungsanstieg auftritt, welcher nach circa 10 ns auf eine verbleibende Klemmspannung von circa 30 V abgefallen ist. Die Spannung des TLP-Pulses beträgt circa 1 kV.

Figur 4 zeigt eine schematische Schnitt- oder Seitenansicht eines Überspannungsschutzbauteils 100, welches, durch die gestrichelten vertikalen Linien angedeutet, in einzelne Überspannungsschutzelemente 10 (siehe oben) vereinzelbar ist. Das genannte Vereinzeln kann durch Sägen, Schneiden oder Stanzen erfolgen. Die Breite oder Kantenlänge des Entladungsdielektrikums 3 beziehungsweise des Entladungsbereichs kann hier zwischen 100 µm und 1000 µm betragen, wobei der Abstand benachbarter Bereiche (vgl. Breite/Kantenlänge der Verbindungsbereiche) zwischen 200 µm und 2000 µm betragen kann.

Die in Figur 4 gezeigte Ausführungsform entspricht im Wesentlichen derjenigen aus den Figuren 1A, 1B und 1C. Gemäß dieser Ausgestaltung ist das Grundmaterial für das Entladungsdielektrikum vorzugsweise durch Siebdruck aufgebracht worden. Zusätzlich ist in Figur 4 gezeigt, dass das Verbindungsdielektrikum in einem Bereich zwischen der ersten Elektrode 1 und den zweiten Elektroden 2 zumindest teilweise mit dem Entladungsdielektrikum 3 überlappt. Dadurch kann mit Vorteil die mechanische Stabilität des Überspannungsschutzbauteils 100 oder der Überspannungsschutzelemente 10 verbessert und/oder auch ohne die zweiten Elektroden 2 hergestellt werden.

Weiterhin ist zu erkennen, dass das Verbindungsdielektrikum 4 und die zweiten Elektroden 2 insbesondere im Verbindungsbereich 5 schräge Flanken aufweisen. Diese Flanken (nicht explizit gekennzeichnet) können durch den Herstellungsprozess des Überspannungsschutzbauteils 100 verursacht werden und insbesondere die mechanische Stabilität des Bauteils erhöhen. Gemäß der genannten Ausgestaltung (vergleiche Figuren 1 und 4) beträgt die Sintertemperatur während des Herstellungsprozesses vorzugsweise zwischen 500°C und 1050°C.

Weiterhin ist während des Herstellungsprozesses zur Verhinderung einer Oxidation der Kupferelektroden (vergleiche erste Elektrode 1 und zweite Elektroden 2) eine Schutzgasatmosphäre, beispielsweise eine Atmosphäre mit einem Inertgas, Wasserstoffgas und/oder einem Gasgemisch aus Stickstoff und Wasserstoff (N₂/H₂) während des Sinterns angewendet worden. Zudem sind das Entladungsdielektrikum 3 und das Verbindungsdielektrikum 4 gemäß dieser Ausführungsform vorzugsweise durch verschiedene oder separate Komponenten oder Körper, beispielsweise Dielektrikumskörper, gebildet.

Das Entladungsdielektrikum 3 und das Verbindungsdielektrikum 4 grenzen gemäß der in Figur 4 dargestellten Ausführungsform vorzugsweise unmittelbar aneinander an, wobei ein abrupter und/oder diskreter Materialphasenübergang zwischen den genannten Komponenten vorliegt. Weiterhin sind das Entladungsdielektrikum 3 und das Verbindungsdielektrikum 4 vorzugsweise unmittelbar zwischen der ersten Elektrode 1 und der zweiten Elektrode 2 angeordnet.

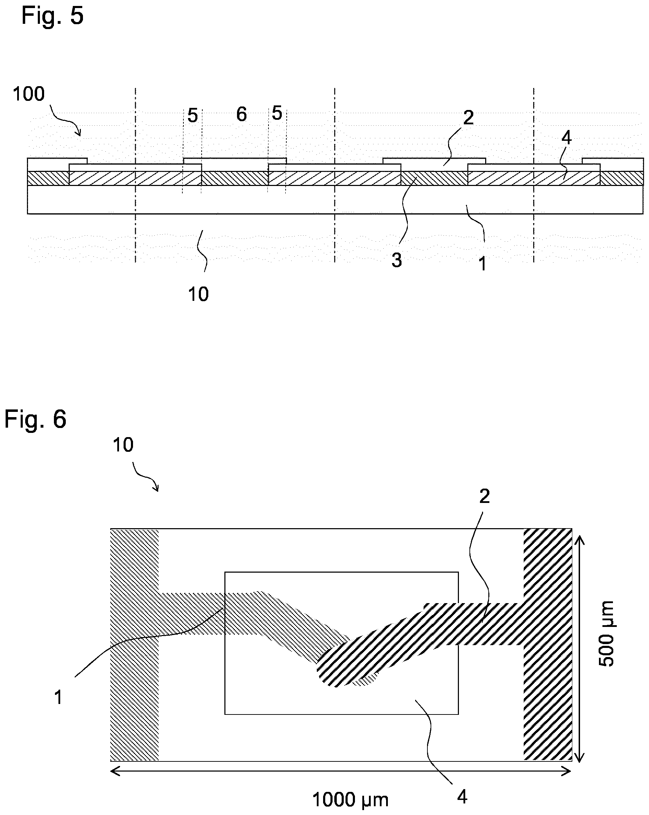

Figur 5 zeigt eine schematische Schnitt- oder Seitenansicht eines Überspannungsschutzbauteils 100 gemäß einer weiteren Ausführungsform. Im Gegensatz zur in Figur 4 dargestellten Ausführungsform, weist jedes Überspannungsschutzelement 10 einen gemeinsamen Dielektrikumskörper (nicht explizit gekennzeichnet) auf, in dem das Verbindungsdielektrikum 4 und das Entladungsdielektrikum 3 unterschiedliche Materialphasen bezeichnen oder bilden. Gemäß dieser Ausgestaltung ist das Grundmaterial für das Entladungsdielektrikum vorzugsweise durch Siebdruck aufgebracht worden. Gemäß dieser Ausführungsform sind das Verbindungsdielektrikum 4 und das Entladungsdielektrikum 3 weiterhin in dem gemeinsamen Dielektrikumskörper stoffschlüssig miteinander verbunden. Bei der Herstellung des Überspannungsschutzbauteils 100 gemäß dieser Ausführungsform wird die erste Elektrode 1 vorzugsweise großflächig oder vollflächig mit dem oben genannten Grundmaterial versehen, wobei die Temperatur in diesem Fall zwischen 500°C und 1050°C, vorzugsweise weniger als 800 °C beträgt und wobei das Verbindungsmaterial (siehe oben) während des Aussetzens der Temperatur, also während des Sinterns, durch das Grundmaterial hindurchdiffundiert und dadurch die mechanische Stabilität zwischen der ersten Elektrode 1 und den zweiten Elektroden 2 hergestellt wird.

Gemäß dieser Ausführungsform umfasst das Verbindungsmaterial vorzugsweise ein Glas oder besteht aus einem Glas. Weiterhin umfasst das Verbindungsmaterial und/oder das Verbindungsdielektrikum, welches durch das Grundmaterial diffundiert, vorzugsweise keine Keramik.

Figur 6 zeigt eine mikroskopische Aufsicht eines Überspannungsschutzelements 10 gemäß einer weiteren Ausführungsform. Das Überspannungsschutzelement, beziehungsweise der in Figur 6 gezeigte Ausschnitt überdeckt eine rechteckige Fläche von circa 1000 µm mal 500 µm. Gemäß der gezeigten Ausführungsform ist das Überspannungsschutzelement 10 oberflächenmontierbar ausgeführt. Mit anderen Worten sind gemäß dieser Ausführungsform sowohl Teile der ersten Elektrode 1 als auch der zweiten Elektrode 2 von einer Oberseite des Überspannungsschutzelementes 10 zugänglich. Diese oberflächenmontierbare Ausgestaltung eröffnet beispielsweise die Möglichkeit, das Überspannungsschutzelement direkt auf eine Leiterplatte oder elektronische Baugruppe zu löten.

Gemäß dieser Ausführungsform ist die erste Elektrode 1 vorzugsweise bereits auf einem separaten Träger (nicht explizit dargestellt) bereitgestellt und strukturiert worden. Nach dem Ausbilden des Entladungsdielektrikums 3 und des Verbindungsdielektrikums 4 ist weiterhin eine zweite Elektrode 2 strukturiert aufgebracht und/oder kontaktiert worden. Über die lateralen Außenränder links und rechts in Figur 6 sind nun beide Elektroden für eine oberflächige Montage des Überspannungsschutzelements 10 und/oder eine elektrische Verbindung oder Kontaktierung zugänglich.

Gemäß dieser Ausführungsform werden vorzugsweise die Elektroden oder Elektrodenstrukturen vorzugsweise mittels Siebdruck oder einem anderen geeigneten Verfahren aufgebracht. In einem zweiten Schritt werden für das Grundmaterial und/oder das Verbindungsmaterial vorzugsweise eine oder mehrere Keramikpasten als Schicht aufgebracht. Die erste Elektrode 1 wird dabei vorzugsweise teilweise oder vollständig von der Schicht bedeckt, wobei diese Schicht den Elektrodenabstand definiert. Es ist hier ebenfalls möglich, beispielsweise wie oben beschrieben, mehrere Schichtlagen übereinander zu stapeln und hinterher zu versintern. Anschließend wird die Probe oder das Bauteil vorzugsweise mit einer Außenterminierung oder Außenelektroden für eine elektrische Kontaktierung versehen.

Die Erfindung ist nicht durch die Beschreibung anhand der Ausführungsbeispiele beschränkt. Vielmehr umfasst die Erfindung jedes neue Merkmal sowie jede Kombination von Merkmalen gemäß dem Schutzumfang der Patentansprüche.

### Bezugszeichenliste

- 1: Erste Elektrode
- 2: Zweite Elektrode
- 3: Entladungsdielektrikum
- 4: Verbindungsdielektrikum
- 5: Verbindungsbereich
- 6: Entladungsbereich

- 10: Überspannungsschutzelement
- 100: Überspannungsschutzbauteil

- TLP: TLP-Puls
- U: Spannungsverlauf

## Patentansprüche

1. Überspannungsschutzelement (10) umfassend:
- eine erste Elektrode (1) und eine zweite Elektrode (2),
- einen Entladungsbereich (6), der zwischen der ersten Elektrode (1) und der zweiten Elektrode (2) angeordnet ist, wobei in dem Entladungsbereich (6) ein poröses Entladungsdielektrikum (3) angeordnet ist, und wobei das Überspannungsschutzelement (10) ausgebildet ist, in den Poren (7) des Entladungsdielektrikums (3) ein Gas zu entladen und so eine elektrisch leitfähige Verbindung zwischen der ersten Elektrode (1) und der zweiten Elektrode (2) herzustellen,
- einen Verbindungsbereich (5), wobei in dem Verbindungsbereich (5) ein Verbindungsdielektrikum (4) angeordnet ist, über das die erste und die zweite Elektrode (1, 2) mechanisch stabil miteinander verbunden sind, und wobei das Verbindungsdielektrikum (4) zumindest teilweise in einem zwischen der ersten und der zweiten Elektrode (1, 2) gebildeten Zwischenraum angeordnet ist, **dadurch gekennzeichnet, dass** das Verbindungsdielektrikum (4) und das Entladungsdielektrikum (3) durch unterschiedliche Materialphasen in einem gemeinsamen Dielektrikumskörper (3, 4) gebildet sind und die Materialphasen kontinuierlich ineinander übergehen.

2. Überspannungsschutzelement (10) nach Anspruch 1, wobei der Entladungsbereich (6) eine Dicke zwischen 5 µm und 50 µm aufweist.

3. Überspannungsschutzelement (10) nach Anspruch 1 oder 2, wobei das Entladungsdielektrikum (3) Zirkoniumoxid, Aluminiumoxid und/oder Magnesiumoxid umfasst.

4. Überspannungsschutzelement (10) nach einem der vorangehenden Ansprüche,
wobei das Verbindungsdielektrikum (4) mechanisch stabiler mit der ersten und der zweiten Elektrode (1, 2) verbunden ist als das Entladungsdielektrikum (3).

5. Überspannungsschutzelement (10) nach einem der vorangehenden Ansprüche,
wobei der Entladungsbereich (6) und der Verbindungbereich (5) nebeneinander angeordnet sind.

6. Überspannungsschutzelement (10) nach einem der vorangehenden Ansprüche,
wobei der Verbindungbereich (5) in Aufsicht auf das Überspannungsschutzelement betrachtet (10) den Entladungsbereich (6) umläuft.

7. Überspannungsschutzelement (10) nach einem der vorangehenden Ansprüche,
wobei das Entladungsdielektrikum (3) eine größere Porosität aufweist als das Verbindungsdielektrikum (4).

8. Überspannungsschutzelement (10) nach mindestens einem der Ansprüche 1 bis 7,
wobei das Entladungsdielektrikum (3) und das Verbindungsdielektrikum (4) durch zwei verschiedene Komponenten aus unterschiedlichen Materialien gebildet sind.

9. Überspannungsschutzelement (10) nach mindestens einem der vorhergehenden Ansprüche, wobei die erste Elektrode (1) eine Kupferschicht mit einer Schichtdicke zwischen 10 µm und 100 µm ist.

10. Überspannungsschutzelement (10) nach mindestens einem der Ansprüche 1 bis 9, welches oberflächenmontierbar ausgeführt ist.

11. Verfahren zur Herstellung eines Überspannungsschutzelements (10) umfassend die folgenden Schritte:
- Breitstellen einer ersten Elektrode (1) für das Überspannungsschutzelement (10),
- Versehen der ersten Elektrode (1) mit einem Grundmaterial für ein Entladungsdielektrikum (3),
- Versehen der mit dem Grundmaterial versehenen ersten Elektrode (1) mit einem Verbindungsmaterial für ein Verbindungsdielektrikum (4),
- Versehen der mit dem Grundmaterial versehenen ersten Elektrode (1) mit einer zweiten Elektrode (2) zur Herstellung eines Grundkörpers, und
- Aussetzen des Grundkörpers einer Temperatur, wobei die Temperatur derart gewählt ist, dass das Verbindungsmaterial mit der ersten und der zweiten Elektrode (1, 2) versintert wird und so das Verbindungsdielektrikum (4) gebildet wird, und aus dem Grundmaterial das Entladungsdielektrikum (3) gebildet wird, wobei das Entladungsdielektrikum (3) porös ist,
wobei das Verbindungsdielektrikum (4) und das Entladungsdielektrikum (3) durch unterschiedliche Materialphasen in einem gemeinsamen Dielektrikumskörper (3, 4) gebildet sind und die Materialphasen kontinuierlich ineinander übergehen.

12. Verfahren nach Anspruch 11, wobei die Temperatur unterhalb der Schmelztemperatur von Kupfer liegt.

13. Verfahren nach Anspruch 11 oder 12, wobei für das Versehen der ersten Elektrode (1) mit dem Grundmaterial, dieses strukturiert aufgebracht wird.

14. Verfahren nach mindestens einem der Ansprüche 11 bis 13, wobei das Verbindungsmaterial neben dem Grundmaterial angeordnet wird.

15. Verfahren nach mindestens einem der Ansprüche 11 bis 14, wobei die erste Elektrode (1) großflächig mit dem Grundmaterial versehen wird, wobei das Verbindungsmaterial auf das Grundmaterial aufgebracht wird und dabei Bereiche des Grundmaterials vom Verbindungsmaterial frei bleiben, und wobei die Temperatur zwischen 500°C und 1050°C beträgt.

16. Verfahren nach Anspruch 15, wobei das Verbindungsmaterial während des Aussetzens der Temperatur durch das Grundmaterial hindurch diffundiert und dadurch die mechanische Stabilität zwischen der ersten Elektrode (1) und der zweiten Elektrode (2) hergestellt wird.

## Claims

1. Overvoltage protection element (10) comprising:
- a first electrode (1) and a second electrode (2),
- a discharge region (6) arranged between the first electrode (1) and the second electrode (2), wherein a porous discharge dielectric (3) is arranged in the discharge region (6), and wherein the overvoltage protection element (10) is designed to discharge a gas in the pores (7) of the discharge dielectric (3) and thus to produce an electrically conductive connection between the first electrode (1) and the second electrode (2),
- a connection region (5), wherein a connection dielectric (4) is arranged in the connection region (5), via which connection dielectric the first and second electrodes (1, 2) are mechanically stably connected to one another, and wherein the connection dielectric (4) is arranged at least partly in an interspace formed between the first and second electrodes (1, 2),
**characterized in that**
the connection dielectric (4) and the discharge dielectric (3) are formed by different material phases in a common dielectric body (3, 4), and the material phases continuously merge into one another.

2. Overvoltage protection element (10) according to Claim 1, wherein the discharge region (6) has a thickness of between 5 µm and 50 µm.

3. Overvoltage protection element (10) according to Claim 1 or 2, wherein the discharge dielectric (3) comprises zirconium oxide, aluminium oxide and/or magnesium oxide.

4. Overvoltage protection element (10) according to any of the preceding claims, wherein the connection dielectric (4) is connected to the first and second electrodes (1, 2) mechanically more stably than the discharge dielectric (3).

5. Overvoltage protection element (10) according to any of the preceding claims, wherein the discharge region (6) and the connection region (5) are arranged alongside one another.

6. Overvoltage protection element (10) according to any of the preceding claims, wherein the connection region (5) extends around the discharge region (6) as viewed in a plan view of the overvoltage protection element (10).

7. Overvoltage protection element (10) according to any of the preceding claims, wherein the discharge dielectric (3) has a greater porosity than the connection dielectric (4).

8. Overvoltage protection element (10) according to at least one of Claims 1 to 7, wherein the discharge dielectric (3) and the connection dielectric (4) are formed by two different components composed of different materials.

9. Overvoltage protection element (10) according to at least one of the preceding claims, wherein the first electrode (1) is a copper layer having a layer thickness of between 10 µm and 100 µm.

10. Overvoltage protection element (10) according to at least one of Claims 1 to 9, which is embodied in a surface-mountable fashion.

11. Method for producing an overvoltage protection element (10) comprising the following steps:
- providing a first electrode (1) for the overvoltage protection element (10),
- providing the first electrode (1) with a basic material for a discharge dielectric (3),
- providing the first electrode (1) provided with the basic material with a connection material for a connection dielectric (4),
- providing the first electrode (1) provided with the basic material with a second electrode (2) for producing a basic body, and
- exposing the basic body to a temperature, wherein the temperature is chosen in such a way that the connection material is sintered with the first and second electrodes (1, 2) and the connection dielectric (4) is thus formed, and the discharge dielectric (3) is formed from the basic material, wherein the discharge dielectric (3) is porous, wherein the connection dielectric (4) and the discharge dielectric (3) are formed by different material phases in a common dielectric body (3, 4) and the material phases continuously merge into one another.

12. Method according to Claim 11, wherein the temperature is below the melting point of copper.

13. Method according to Claim 11 or 12, wherein, for providing the first electrode (1) with the basic material, the latter is applied in a structured fashion.

14. Method according to at least one of Claims 11 to 13, wherein the connection material is arranged alongside the basic material.

15. Method according to at least one of Claims 11 to 14, wherein the first electrode (1) is provided with the basic material over a large area, wherein the connection material is applied to the basic material and in this case regions of the basic material remain free of the connection material, and wherein the temperature is between 500°C and 1050°C.

16. Method according to Claim 15, wherein the connection material diffuses through the basic material during exposure to the temperature and the mechanical stability between the first electrode (1) and the second electrode (2) is produced as a result.

## Revendications

1. Elément de protection contre les surtensions (10), comprenant :
- une première électrode (1) et une deuxième électrode (2),
- une zone de décharge (6) qui est disposée entre la première électrode (1) et la deuxième électrode (2), un diélectrique de charge (3) poreux étant disposé dans la zone de décharge (6), et l'élément de protection contre les surtensions (10) étant réalisé pour décharger un gaz dans les pores (7) du diélectrique de décharge (3) et établir ainsi une liaison électriquement conductrice entre la première électrode (1) et la deuxième électrode (2),
- une zone de liaison (5), un diélectrique de liaison (4) étant disposé dans la zone de liaison (5) par lequel la première et la deuxième électrode (1, 2) sont reliées ensemble de manière mécaniquement stable, et le diélectrique de liaison (4) étant disposé au moins partiellement dans un intervalle formé entre la première et la deuxième électrode (1, 2),
**caractérisé en ce que** le diélectrique de liaison (4) et le diélectrique de décharge (3) sont formés par des phases de matière différentes dans un corps diélectrique commun (3, 4) et **en ce que** les phases de matière passent l'une à l'autre en continu.

2. Elément de protection contre les surtensions (10) selon la revendication 1, dans lequel la zone de décharge (6) présente une épaisseur comprise entre 5 µm et 50 µm.

3. Elément de protection contre les surtensions (10) selon la revendication 1 ou 2, dans lequel le diélectrique de décharge (3) comprend de l'oxyde de zirconium, de l'oxyde d'aluminium et/ou de l'oxyde de magnésium.

4. Elément de protection contre les surtensions (10) selon l'une quelconque des revendications précédentes, dans lequel le diélectrique de liaison (4) est relié de manière mécaniquement plus stable à la première et à la deuxième électrode (1, 2) que le diélectrique de décharge (3).

5. Elément de protection contre les surtensions (10) selon l'une quelconque des revendications précédentes, dans lequel la zone de décharge (6) et la zone de liaison (5) sont disposées côte à côte.

6. Elément de protection contre les surtensions (10) selon l'une quelconque des revendications précédentes, dans lequel la zone de liaison (5) passe autour de la zone de décharge (6), en vue de dessus de l'élément de protection contre les surtensions (10).

7. Elément de protection contre les surtensions (10) selon l'une quelconque des revendications précédentes, dans lequel le diélectrique de décharge (3) présente une plus grande porosité que le diélectrique de liaison (4) .

8. Elément de protection contre les surtensions (10) selon au moins l'une des revendications 1 à 7, dans lequel le diélectrique de décharge (3) et le diélectrique de liaison (4) sont formés par deux composants différents en matériaux différents.

9. Elément de protection contre les surtensions (10) selon au moins l'une des revendications précédentes, dans lequel la première électrode (1) est une couche de cuivre d'une épaisseur de couche comprise entre 10 µm et 100 µm.

10. Elément de protection contre les surtensions (10) selon au moins l'une des revendications 1 à 9, réalisé de façon à pouvoir être monté en surface.

11. Procédé de fabrication d'un élément de protection contre les surtensions (10), comprenant les étapes suivantes consistant à :
- fournir une première électrode (1) pour l'élément de protection contre les surtensions (10),
- munir la première électrode (1) d'un matériau de base pour un diélectrique de décharge (3),
- munir la première électrode (1) munie du matériau de base d'un matériau de liaison pour un diélectrique de liaison (4),
- munir la première électrode (1) munie du matériau de base d'une deuxième électrode (2) pour fabriquer un corps de base, et
- exposer le corps de base à une température, dans lequel la température est sélectionnée de telle sorte que le matériau de liaison est fritté avec la première et la deuxième électrode (1, 2) et ainsi le diélectrique de liaison (4) est formé, et le diélectrique de décharge (3) est formé à partir du matériau de base, le diélectrique de décharge (3) étant poreux,
le diélectrique de liaison (4) et le diélectrique de décharge (3) étant formés par des phases de matière différentes dans un corps de diélectrique commun (3, 4) et les phases de matière passant l'une à l'autre en continu.

12. Procédé selon la revendication 11, dans lequel la température se situe au-dessous de la température de fusion du cuivre.

13. Procédé selon la revendication 11 ou 12, dans lequel le matériau de base est appliqué de manière structurée pour munir la première électrode (1) du matériau de base.

14. Procédé selon au moins l'une des revendications 11 à 13, dans lequel le matériau de liaison est disposé à côté du matériau de base.

15. Procédé selon au moins l'une des revendications 11 à 14, dans lequel la première électrode (1) est munie du matériau de base sur une grande surface, le matériau de liaison étant appliqué sur le matériau de base et certaines zones du matériau de base restant exemptes de matériau de liaison, et la température étant comprise entre 500 °C et 1050 °C.

16. Procédé selon la revendication 15, dans lequel pendant l'exposition à la température, le matériau de liaison diffuse à travers le matériau de base et établit ainsi la stabilité mécanique entre la première électrode (1) et la deuxième électrode (2).
